# EUROPEAN PATENT APPLICATION

(11) **EP 2 366 976 A1**
(43) Date of publication of application: **21.09.2011**
(21) Application number: 10156894.7
(22) Date of filing: 18.03.2010
(51) Int. Cl.: G01D 5/14, G01D 11/24

(54) **Sensor package having shaped lead frame**

(71) Applicant: NXP B.V., 5656 AG Eindhoven (NL)
(72) Inventor: Offermann, Bernd, Redhill, Surrey RH1 1DL (GB)
(74) Representative: Williamson, Paul Lewis

(57) **Abstract**

A sensor assembly includes a lead frame having a recessed portion with a recess face, and an electrical component that is disposed in the recessed portion. The electrical component can be a capacitor, a resistor, or a coil.

## Description

### FIELD OF THE INVENTION

This invention relates generally to multicomponent electronic assemblies, and, more specifically, to compact magnetic sensor packages.

### BACKGROUND OF THE INVENTION

Magnetic rotational sensors suitable for use in automotive applications are becoming increasingly widespread due to their accuracy, reliability, and relatively compact size. Speaking generally, such a magnetic rotational sensor includes a powered active sensor element located in proximity to a rotatable magnet. The signal output from the sensor in response to movement of the magnet can be processed to determine the rotational position or angular velocity of the rotatable magnet (alternatively, the magnet could be kept stationary and portions of the sensor could be rotated). Magnetic rotational sensors can be used in a vehicle motor as a throttle position sensor, and in the vehicle's wheel assemblies to determine wheel speed. Such sensors are particularly well-suited for use in antilock braking systems.

Such a sensor may detect a range of motion of less than 360°, as in the case of a throttle angle sensor, or a range of motion of more than 360°, as in the case of a wheel sensor, where multiple wheel rotations, each of 360°, are measured. For the purpose of this application, the terms angle sensor and rotational sensor are used interchangeably, unless otherwise apparent from context.

Safety and reliability are important design considerations for automotive angle sensors. Consequently, active rotational sensors are provided with capacitors to insure the sensors can operate reliably even if there are fluctuations in the operating power supplied thereto (the capacitors act as buffers), or the power supply fails (the capacitors provide stored power for some time). More specifically, the capacitors act to insure the device can resist problems from electrostatic discharges and is electromagnetically compatible. Thus, capacitors are important parts of rotational sensors, serving both power buffering and power storage functions. Also, due to the harsh environments in which automotive sensors may operate, their capacitors preferably have a high capacitance and high voltage resistance, which means that the capacitors used will be relatively large compared to the size of other components in the sensor. Since the capacitor used in each rotational sensor must store substantial power to insure the associated sensor can operated for a prolonged period of power fluctuation or interruption, for this reasons as well the capacitor will be relatively large, and the size of the capacitor therefore complicates design of the sensor package. In addition, an output capacitor may be incorporated in the sensor to allow for direction connection of the sensor's output to the vehicle's low-capacitance electronic control unit.

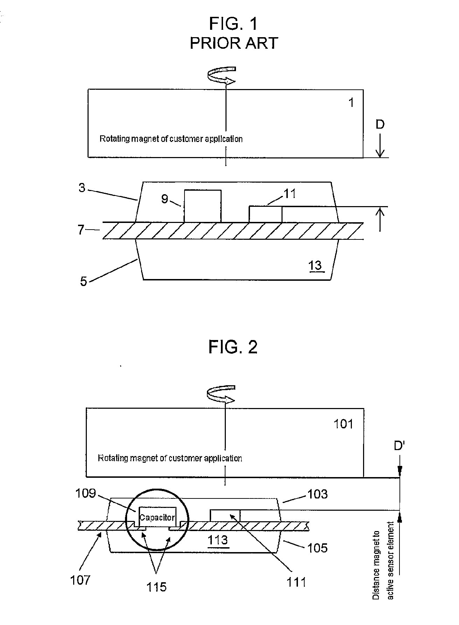

Turning now to Fig. 1, a magnetic rotational sensor assembly 13 of known design is depicted. Upper and lower housings 3 and 5 enclose a capacitor 9 and sensor 11, which are mounted on a lead frame 7. Typically, lead frame 7 is relatively thick, in order to comply with the applicable packaging standard, and/or to support a direct cable connection to the sensor, or to allow through hole assembly on a circuit board. In addition, the lead frame 7 is preferably stiff enough to withstand all forces which are exerted on the supported components such as capacitor 9 and sensor 11 during both manufacture and use. In such a rotational magnetic sensor assembly 13, it is strongly desirable to locate the magnet 1 close to the sensor 11, since arranging the sensor 11 in a strong, uniform magnetic field as can be obtained through such proximity improves sensor accuracy and reliability. However, the large capacitor 9 required for safety limits significantly how closely the sensor 11 can be placed near the magnet (the capacitors typically used are much higher in size than the Si-type sensor chips typically used). It is highly desirable to place the magnet close to the sensor because, as the gap between the magnet and the sensor widens, the costs of the magnet rise because it is more difficult (expensive) to have a magnet which can produce the required magnetic field across the increased distance. In Fig. 1 the bottom of the rotating magnet 1 is separated from the top of the sensor 11 by airgap distance D. For angular sensors, D is typically approximately 1-2 mm, and approximately 4 mm for rotational sensors. In some applications, the sensor can be covered with a layer of polymer 300-500 µm thick.

So if the sensor 11 and capacitor 9 are arranged on a single lead frame 7, the large size of the capacitor 9 means that the sensor 11 cannot be positioned as close to the magnet as is desirable. The use of a capacitor 9 in the sensor assembly 13 makes it difficult to reduce the size of the sensor assembly 13.

Reducing the size of the sensor assembly 13 is desirable at least in part because it permits an older sensor assembly of given size to be replaced with a newer, more sophisticated sensor of the same size (if the size of the newer sensor assembly were not to be reduced, it might not be possible to substitute the newer sensor assembly for the older one).

In an attempt to move the sensor 11 closer to the magnet 1 without interference from the large capacitor 9, the sensor 11 and capacitor 9 could be provided on discrete substrates (not shown), with the sensor 11 and capacitor 9 being connected by electrical leads (not shown). However, this approach undesirably complicates manufacture and installation, since now two substrates must be mounted. Furthermore, during installation care must be taken not to damage the fragile electrical leads that connect the sensor and capacitor.

Another possible approach is to place the capacitor at the sensor package's periphery (not shown), but this approach also is undesirable because it increases the size of the sensor package, and, further, increases the sensor's cost due to the need to use additional materials to produce an assembly large enough so that the capacitor can be located in the package at a position that is shifted sufficiently far from the magnet so as not to prevent the magnet and sensor from being arranged close together.

Some electronic device packages include a depressed well structure, also known as a downset, on which an electronic component can be mounted, to allow for a more compact package design.

Accordingly, there is a need for a rotational sensor package construction that allows for the assembly of compact sensor packages.

### SUMMARY OF THE INVENTION

One aspect of this invention is directed to a sensor assembly with a lead frame having a recessed portion that includes a recess face, and an electrical component disposed in the recessed portion.

Optionally, the recessed portion can include any of a thinned wall portion, a downset portion, and a through hole. Also optionally, the electrical component can be any of a capacitor, a resistor, and a coil.

Another aspect of this invention concerns a sensor assembly that includes a lead frame having a recessed portion with a thinned wall portion having a recess face, an electrical component disposed in the recessed portion, the electrical component having a component top surface, and a sensor having a sensor top surface.

In another aspect of this invention, at least a portion of the component top surface lies in a first plane and a portion of the sensor top surface lies in a second plane, the first plane and the second plane being separated by not more than approximately 200 µm

Optionally, the thinned wall portion can have a thickness that is approximately 40-70% of a thickness of the lead frame. Also, seen from above, the recess face can be square, rectangular, round or oval. The recessed portion can include a through hole. Also optionally, the electrical component can be any of a capacitor, a resistor, or a coil.

This invention also involves a sensor assembly with a lead frame having a recessed portion with a thinned wall portion having a recess face, an electrical component disposed in the recessed portion, the electrical component having a component top surface, a sensor having a sensor top surface, and a magnet having a bottom surface arranged to oppose the sensor top surface.

In another aspect of this invention, at least a portion of the sensor top surface lies in a first plane and at least a portion of the magnet bottom surface lies in a second plane, and the first plane and the second plane are separated by not more than approximately 4 mm, and, more preferably, by not more than approximately 2 mm.

Optionally, the thinned wall portion can have a thickness that is approximately 40-70% of a thickness of the lead frame. Seen from above, the recess face can be square, rectangular, round or oval. The recessed portion can include a through hole. The electrical component can be a capacitor, a resistor or a coil.

### BRIEF DESCRIPTION OF THE DRAWINGS

FIG. 1 is a side elevational view of a magnetic sensor package in accordance with the known art;

FIG. 2 is a side elevational view of a magnetic sensor package in accordance with the present invention;

FIG. 3 is a side elevational view of the circled portion of the sensor package depicted in FIG. 2;

FIG. 4 is a top plan view of the sensor package shown in FIG. 2, with the upper and lower housings removed; and

FIG. 5 is a side cross-sectional view showing a capacitor mounted on a lead frame in a downset and thinned region.

### DETAILED DESCRIPTION OF EXEMPLARY EMBODIMENTS

Fig. 2 depicts a sensor package 113 constructed in accordance with one aspect of the present invention. As depicted in Fig. 2, a sensor 111 and capacitor 109 are supported by a lead frame 107. Upper and lower housings 103 and 105 cover the components of sensor package 113 (housings 103 and 105 need not fully-enclose the components, and even could be omitted entirely, or a single one-piece housing or encapsulating coating such as cured polymer resin could be used, if desired).

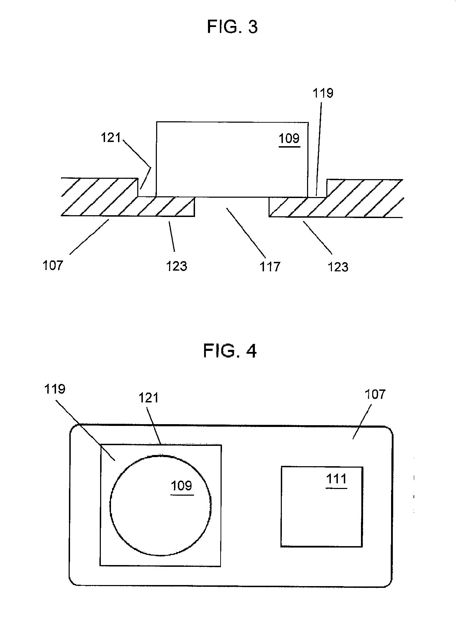

As shown in Fig. 2, capacitor 109 is located on lead frame 107 at a region 115 where the lead frame 107 has been reduced in thickness. This can be better appreciated with reference to Fig. 3, which is a close-up view of the circled portion of Fig. 2.

Turning to Fig. 3, capacitor 109 is located in a thinned portion of the lead frame 107 defined at least in part by a vertical wall 121 shown on the left side and a horizontal recess face 119 (the corresponding vertical wall on the right side is not numbered). Thus, the lead frame 107 has a thinned wall portion 123. Because of this arrangement, the bottom of the capacitor 109 is positioned on the horizontal recess face 119 below the top of the lead frame 107, and so the top of the capacitor does not extend upward as much as if the capacitor was mounted in the conventional manner (the top of the capacitor is lowered by the amount of thinning of the lead frame). Thus, by lowering the position of the top of the capacitor 109, which normally extends upward more than the top of the sensor 111 and so limits how close the magnet bottom can be brought toward the sensor, the bottom of the magnet 101 can be brought closer to the top of sensor 111 than is possible with known mounting techniques. So in this invention the magnet-sensor separation D' shown in Fig. 2 is significantly less than the magnet-sensor separation D shown in Fig. 1.

In thinning the lead frame, care should be taken to retain enough lead frame material in the thinned wall portion 123 so that the capacitor is still supported securely.

As also shown in Fig. 3, the bottom of the thinned region of lead frame 107 can have a through-hole 117, although a solid bottom also could be used. Through-hole 117 can facilitate mounting of the capacitor on lead frame 107, since a positioning element such as a robot arm or assembly jig can make contact with the bottom of the capacitor. If the capacitor is attached to the lead frame 107 by adhesive, excess adhesive can escape through the through-hole and, optionally, be removed. A further advantage to having through-hole 117 is that the through-hole 117 can improve convective cooling of the capacitor or can be placed into contact with a heat sink. Additionally, the leads (not shown) of the capacitor 109 could be routed via through-hole 117.

Fig. 4 depicts in top plan view how the capacitor 109 is positioned in the thinned portion of the lead frame 107 on the horizontal recess face 119 (electrical connections to the capacitor 109 and sensor 111 are omitted). Seen from above, capacitor 109 is circular, and the vertical wall 121 of the thinned portion of the lead frame 107 defines a substantially square horizontal recess face 119 on which the capacitor is located. These shapes are merely exemplary and not limiting; for instance, one might choose to provide a circular capacitor and circular thinned portion, a square capacitor and a square thinned portion, or a square capacitor and a circular thinned portion. Rectangular, oval and irregularly shaped capacitor and recess face geometries could be used as well, provided the selected shapes allow the capacitor to fit entirely within the thinned portion. Also, while it presently is considered to be preferable for the horizontal recess face and the capacitor bottom to both be flat, other contours could be employed.

Typically, the sensor 111 can be approximately 250-380 µm in height. Preferably, a clearance space of 200 µm is left above the sensor for wirelooping, meaning that, preferably, the capacitor would not be more than approximately 450-580 µm in height (this way, the magnet's bottom face can be brought to within approximately 200 µm of the top of the sensor, leaving the desired 200 µm clearance space). However, in practice, it is preferable to use size 0603 capacitors, which are approximately 800 µm in height. Accordingly, it is desirable to lower the height of the capacitor by 220-350 µm so that the capacitor's top surface lies as the same level as the 450-580 µm plane over the sensor which allows for the 200 µm clearance space. More specifically, when a shorter sensor is used, it is desirable to lower the top of the capacitor by a correspondingly increased amount.

Typically, the thickness of lead frames used in these packages is approximately 250-380 µm. So producing a recess at least 220 µm deep in the lead frame is possible, and an even deeper recess can be produced, depending upon the lead frame's original thickness.

The thinned portion having the horizontal recess face 119 and the optional through-hole 117 can be formed in the lead frame 107 by any suitable manufacturing technique, whether now known or hereafter discovered. By way of non-limiting example, coining could be used to shape the lead frame 107 as desired. One benefit to coining is that the thinned region and through-hole 117 could be formed in a single operation. It is envisioned that, if coining is used, the thinned wall portion 123 preferably should be approximately 50-70% of the thickness of the lead frame 107.

Other techniques such as precision milling, masking with photoresist and etching (in particular, half etching), laser ablation, and electron beam machining could be used. If half-etching is used, the thinned wall portion could have a thickness that is approximately 40% of the original lead frame thickness. A combination of these different techniques also could be used.

Preferably, the resulting separation between the top of the sensor and the bottom of the magnet is approximately 1-2 mm.

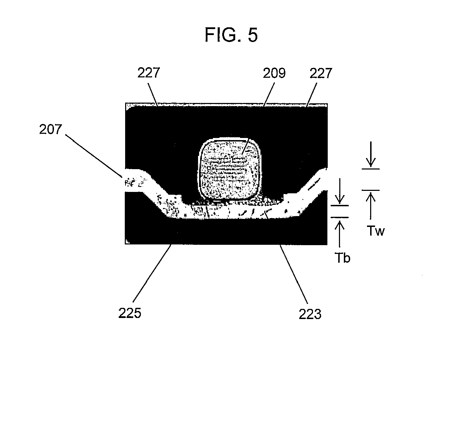

In an alternative embodiment, shown in Fig. 5, the lead frame 207 can be coined or stamped to have a depressed well 225, also known as a downset, corresponding to the thinned region discussed above. In this embodiment, the lead frame 207 is shaped by deformation so that the downwardly protruding well 225 is configured to accommodate the capacitor 209. The capacitor 209 is held in place by adhesive 227, but this is only exemplary and non-limiting - any other suitable mounting technique could be used. As can be seen in Fig. 5, the bottom wall 223 of the downset 225 is thinned during the manufacturing process, and its thickness, Tb, is approximately half the original thickness of the wall of the lead frame 207, Tw. This is beneficial because thinning the wall means the top surface of the capacitor 209 can be lowered even more (however, it may be desirable only to downset, and not thin substantially, the wall). A further benefit to this arrangement is that, unlike the configuration shown in Figs. 2-4, which limits the distance by which the top of the capacitor can be lowered to somewhat less than the thickness of the lead frame, the well could be lowered substantially below the bottom of the undeformed portions of the lead frame, meaning the top surface of the capacitor could be lowered substantially more than is possible with that other embodiment, as is clear from Fig. 5, wherein the bottom of the capacitor is at a position somewhat below the bottom surface of the undeformed portion of the lead frame. It will be appreciated that the distance by which the well of the lead frame can project downward will depend at least in part upon the ductility of the lead frame material, and the fabrication conditions (for example, during shaping the lead frame could be heated to improve its ductility). Alternatively, a lead frame having a well could be formed by other suitable techniques, such as casting followed by rolling.

Although each of the foregoing embodiments includes a single capacitor and sensor, it should be understood that multiple capacitors and/or multiple sensors could be employed.

As depicted in Fig. 2, portions of lead frame 107 extend outward from upper and lower housings 103 and 105. However, this is only by way of example, and the lead frame 107 could be fully-enclosed by the housings 103 and 105.

This invention is not limited to use with capacitors and sensors; it can be used to product compact assemblies that are made with components which differ substantially in their heights.

By virtue of this invention, it is possible to improve magnetic sensors by arranging the sensor element closer to the associated magnet than was previously possible, resulting in improved sensor performance and/or more compact design.

As an example of a field wherein this invention can be helpful, automotive wheel sensors can employ one or more sensor elements, each being arranged on a lead frame in opposition to a magnet (two sensors could oppose a single magnet). By way of nonlimiting example, sensors using AMR/GMR/TMR and HALL-effects could be employed, and this invention is not to be limited thereto. By using the present invention in the fabrication of these sensors, package size can be reduced and performance improved.

Any sensor package constructed as outlined above is contemplated; this invention extends to all fields of manufacture and use, including sensors which operate on different principles.

Various exemplary embodiments are described in reference to specific illustrative examples. The illustrative examples are selected to assist a person of ordinary skill in the art to form a clear understanding of, and to practice the various embodiments. However, the scope of systems, structures and devices that may be constructed to have one or more of the embodiments, and the scope of methods that may be implemented according to one or more of the embodiments, are in no way confined to the specific illustrative examples that have been presented. On the contrary, as will be readily recognized by persons of ordinary skill in the relevant arts based on this description, many other configurations, arrangements, and methods according to the various embodiments may be implemented.

The present invention has been described with respect to particular embodiments and with reference to certain drawings, but the invention is not limited thereto, but rather, is set forth only by the claims. The drawings described are only schematic and are non-limiting. In the drawings, for illustrative purposes, the size of various elements may be exaggerated and not drawn to a particular scale. It is intended that this invention encompasses inconsequential variations in the relevant tolerances and properties of components and modes of operation thereof. Imperfect practice of the invention is intended to be covered.

Where the term "comprising" is used in the present description and claims, it does not exclude other elements or steps. Where an indefinite or definite article is used when referring to a singular noun, e.g. "a" "an" or "the", this includes a plural of that noun unless something otherwise is specifically stated. Hence, the term "comprising" should not be interpreted as being restricted to the items listed thereafter; it does not exclude other elements or steps, and so the scope of the expression "a device comprising items A and B" should not be limited to devices consisting only of components A and B. This expression signifies that, with respect to the present invention, the only relevant components of the device are A and B.

## Claims

1. A sensor assembly, comprising:
a lead frame having a recessed portion that includes a recess face; and
an electrical component disposed in the recessed portion.

2. A sensor assembly according to claim 1, wherein the recessed portion includes a thinned wall portion.

3. A sensor assembly according to claim 1, wherein the recessed portion includes a downset portion.

4. A sensor assembly according to claim 1, wherein the recessed portion includes a through hole.

5. A sensor assembly according to claim 1, wherein the electrical component is one of a capacitor, a resistor, and a coil.

6. A sensor assembly, comprising:
a lead frame having a recessed portion with a thinned wall portion having a recess face;
an electrical component disposed in the recessed portion, the electrical component having a component top surface; and
a sensor having a sensor top surface.

7. A sensor according to claim 6, wherein at least a portion of the component top surface lies in a first plane, and at least a portion of the sensor top surface lies in a second plane, and the first plane and the second plane are separated by not more than approximately 200 µm.

8. A sensor according to claim 6, wherein the thinned wall portion has a thickness that is approximately 40-70% of a thickness of the lead frame.

9. A sensor assembly according to claim 6, wherein, seen from above, the recess face is one of square, rectangular, round and oval.

10. A sensor assembly according to claim 7, wherein the recessed portion includes a through hole.

11. A sensor assembly according to claim 7, wherein the electrical component is one of a capacitor, a resistor, and a coil.

12. A sensor assembly, comprising:
a lead frame having a recessed portion with a thinned wall portion having a recess face;
an electrical component disposed in the recessed portion, the electrical component having a component top surface;
a sensor having a sensor top surface; and
a magnet having a bottom surface arranged to oppose the sensor top surface,
wherein at least a portion of the sensor top surface lies in a first plane and at least a portion of the magnet bottom surface lies in a second plane, and the first plane and the second plane are separated by not more than approximately 4 mm.

13. A sensor according to claim 12, wherein the first plane and the second plane are separated by not more than 2 mm.

14. A sensor according to claim 12, wherein the thinned wall portion has a thickness that is approximately 40-70% of a thickness of the lead frame.

15. A sensor assembly according to claim 12, wherein, seen from above, the recess face is one of square, rectangular, round and oval.

16. A sensor assembly according to claim 12, wherein the recessed portion includes a through hole.

17. A sensor assembly according to claim 12, wherein the electrical component is one of a capacitor, a resistor, and a coil.
